# EUROPÄISCHE PATENTSCHRIFT

(11) **EP 3 494 625 B1**
(45) Veröffentlichungstag und Bekanntmachung des Hinweises auf die Patenterteilung: **15.07.2020**
(21) Anmeldenummer: 17746079.7
(22) Anmeldetag: 28.07.2017
(51) Int. Cl.: H02J 7/02, H02M 1/12, B60L 53/30

(54) **VERFAHREN ZUM BETRIEB EINES NETZBETRIEBENEN LADEGERÄTS AN EINER NICHTSINUSFÖRMI-GEN NETZSPANNUNG**
METHOD FOR OPERATING A MAINS-OPERATED CHARGING DEVICE ON A NON-SINUSOIDAL MAINS VOLTAGE
PROCÉDÉ POUR FAIRE FONCTIONNER UN APPAREIL DE CHARGE FONCTIONNANT SUR SECTEUR À UNE TENSION SECTEUR NON SINUSOÏDALE

(30) Priorität: 05.08.2016 DE 102016214518
(43) Veröffentlichungstag der Anmeldung: 12.06.2019
(73) Patentinhaber: Robert Bosch GmbH, 70442 Stuttgart (DE)
(72) Erfinder: MACK, Juergen, 73035 Goeppingen (DE)
(86) Internationale Anmeldenummer: PCT/EP2017/069182
(87) Internationale Veröffentlichungsnummer: WO 2018/024638

(56) Entgegenhaltungen:
- EP-A1- 2 752 967
- EP-A1- 2 966 762
- EP-A2- 1 204 197
- US-A1- 2015 016 162
- US-A1- 2015 028 818

## Beschreibung

### Stand der Technik

Es ist bereits ein Verfahren zum Betrieb eines netzbetriebenen Ladegeräts an einem Spannungsversorgungsnetz mit einer Netzspannung, welche zumindest zeitweise einen nichtsinusförmigen Spannungsverlauf aufweist, vorgeschlagen worden. Relevanter Stand der Technik zur Erkennung von nichtsinusförmigen Netzspannungen und entsprechender Anpassung von Eingangsfiltern findet sich in EP 2752967 A1, EP 1204197 A2, EP 2966762 A1, US 2015016162 A1, US 2015028818 A1.

### Offenbarung der Erfindung

Die Erfindung bezieht sich auf eine Ladegerätvorrichtung für ein Ladegerät wie in Anspruch 1 beschrieben.

Unter einem "Ladegerät" soll in diesem Zusammenhang insbesondere eine elektronische Vorrichtung verstanden werden, welche dazu vorgesehen ist, während eines Ladevorgangs eine elektrische Energie an zumindest eine Energiespeichereinheit, insbesondere an eine wiederaufladbare Batterie und/oder einen Acku, zu übertragen. Insbesondere ist das Ladegerät dazu vorgesehen, mit einer Wechselspannung betrieben zu werden. Darunter, dass das Ladegerät "netzbetrieben" ist, soll in diesem Zusammenhang insbesondere verstanden werden, dass das Ladegerät insbesondere zu einem Betrieb an einem Wechselspannungsnetz und/oder einem wechselgerichteten Gleichspannungsnetz vorgesehen ist. Insbesondere ist das Ladegerät dazu vorgesehen, eine eingangsseitige Wechselspannung in zumindest eine ausgangsseitige Ladespannung, insbesondere in eine Ladegeleichspannung, zu transformieren und/oder umzuformen. Insbesondere weist das Ladegerät zumindest eine Eingangsfiltereinheit auf, welche dazu vorgesehen ist, zumindest eine Störung einer Netzspannung zumindest teilweise zu filtern. Ferner weist das Ladegerät insbesondere zumindest eine Ladeeinheit auf, welche dazu vorgesehen ist, die zumindest im Wesentlichen entstörte Netzspannung in eine Ladespannung transformieren und/oder umzuformen. Insbesondere ist das Ladegerät als ein kontaktgebundenes Ladegerät ausgebildet. Unter einem "kontaktgebundenen Ladegerät" soll hier insbesondere ein Ladegerät verstanden werden, welches elektrische Energie mittels zumindest eines Ladekontakts an eine zu ladende Energiespeichereinheit. Unter einem "Spannungsversorgungsnetz" soll in diesem Zusammenhang insbesondere ein elektrisches Versorgungsnetz verstanden werden, welches dazu vorgesehen ist, dem Ladegerät eine zu einem Laden zumindest einer Energiespeichereinheit benötigte elektrische Energie zuzuführen. Insbesondere ist das Spannungsversorgungsnetz als ein Wechselspannungsnetz und/oder ein Gleichspannungsnetz, insbesondere als ein Bordnetz eines Fahrzeugs, mit zumindest einem Wechselrichter ausgebildet, welcher dazu vorgesehen ist, die Gleichspannung des Gleichspannungsnetzes in eine Wechselspannung zu wandeln. Insbesondere kann der Wechselrichter ausgangsseitig fest in das Gleichspannungsnetz integriert sein und/oder als separate Baugruppe ausgangsseitig insbesondere lösbar mit dem Gleichspannungsnetz verbunden sein.

Darunter, dass die Netzspannung zumindest zeitweise einen "nichtsinusförmigen Spannungsverlauf aufweisen kann" soll in diesem Zusammenhang insbesondere verstanden werden, dass der zeitliche Spannungsverlauf der Netzspannung zumindest zeitweise einen Klirrfaktor größer als 0 aufweisen kann. Insbesondere weist der zeitliche Spannungsverlauf der Netzspannung zumindest zeitweise einen Klirrfaktor zwischen 0,2 und 0,5 auf. Die Netzspannung kann insbesondere zumindest zeitweise mit Oberwellen und oder schnellen Schaltflanken behaftet sein. Insbesondere weist die Netzspannung dauerhaft einen nichtsinusförmigen Spannungsverlauf, insbesondere einen nicht sinusförmigen Wechselspannungsverlauf, auf. Insbesondere entspricht der Spannungsverlauf der Netzspannung einem modifizierten Sinusverlauf. Unter einem "modifizierten Sinusverlauf" soll in diesem Zusammenhang insbesondere ein Spannungsverlauf, insbesondere ein Wechselspannungsverlauf, verstanden werden, welcher einem zumindest im Wesentlichen spektralreinen Sinusverlauf insbesondere treppenförmig, rechteckförmig und/oder trapezförmig angenähert ist.

Darunter, dass eine "Abweichung von einer Sinusförmigkeit der Netzspannung detektiert" wird, soll in diesem Zusammenhang insbesondere verstanden werden, dass eine Abweichung des Spannungsverlaufs der Netzspannung von einem zumindest im Wesentlichen spektralreinen Sinusverlauf insbesondere qualitativ und/oder quantitativ erfasst wird. Insbesondere kann eine Detektion einer Abweichung von einer Sinusförmigkeit der Netzspannung einmalig bei einer Inbetriebnahme des Ladegeräts an einem Spannungsversorgungsnetz und/oder kontinuierlich während eines Betriebs des Ladegeräts erfolgen. Die Detektion der Abweichung von einer Sinusförmigkeit der Netzspannung wird insbesondere mittels einer insbesondere zumindest teilweise in das Ladegerät integrierten und/oder einer der Ladegerät vorgeschalteten Detektionseinheit durchgeführt. Insbesondere erfolgt die Detektion unmittelbar eingangsspannungsseitig.

Durch eine derartige Ausgestaltung kann ein vorteilhaftes Verfahren zum Betrieb eines netzbetriebenen Ladegeräts bereitgestellt werden. Insbesondere kann durch eine Detektion einer Abweichung von einer Sinusförmigkeit der Netzspannung während einer Inbetriebnahme und/oder eines Betriebs des Ladegeräts vorteilhaft einfach und/oder zuverlässig erkannt werden, ob das Ladegerät an einem Spannungsversorgungsnetz mit einer zumindest im Wesentlichen spektralreinen sinusförmigen Netzspannung oder an einem Spannungsversorgungsnetz mit einer wechselförmigen Netzspannung betrieben wird, welche insbesondere das Ladegerät schädigende Oberwellen und/oder Schaltflanken aufweist. Solche Oberwellen können insbesondere aufgrund von schnellen Schaltflanken der Netzspannung bei Verwendung von Wechselrichtern, welche eine Netzspannung in Form eines modifizierten Sinus ausgeben, auftreten und zu Belastungen von Eingangsfiltern des Ladegeräts und/oder Beschädigungen des Ladegeräts führen.

Ferner wird vorgeschlagen, dass die Abweichung von der Sinusförmigkeit zumindest anhand eines Frequenzspektrums der Netzspannung detektiert wird. Insbesondere wird das Frequenzspektrum der Netzspannung kontinuierlich oder quasikontinuierlich, beispielsweise mittels einer harmonischen Analyse, insbesondere einer Fourier-Analyse, beispielsweise unter Verwendung einer diskreten und/oder schnellen Fourier-Transformation, erfasst und/oder berechnet. Insbesondere wird das Frequenzspektrum der Netzspannung auf das Vorhandensein von Oberwellen hin analysiert. Alternativ oder zusätzlich wird vorgeschlagen, dass die Abweichung von der Sinusförmigkeit zumindest anhand einer Scheitelspannung der Netzspannung detektiert wird. Insbesondere wird die Scheitelspannung der Netzspannung kontinuierlich oder quasikontinuierlich analog und/oder mittels eines Analog-Digital-Wandlers gemessen und/oder erfasst. Insbesondere wird die gemessene und/oder erfasste Scheitelspannung der Netzspannung dahingehend ausgewertet, ob diese eine Scheitelspannung einer zumindest im Wesentlichen spektralreinen Sinusspannung mit zumindest im Wesentlichen identischem Effektivwert überschreitet. Hierdurch kann vorteilhaft einfach und/oder zuverlässig eine Abweichung von einer Sinusförmigkeit der Netzspannung detektiert werden.

Des Weiteren wird vorgeschlagen, dass in zumindest einem Verfahrensschritt in Abhängigkeit von der Abweichung von der Sinusförmigkeit verschiedene Filterstufen einer Eingangsfiltereinheit geschaltet werden wird. Insbesondere werden die Filterstufen in Abhängigkeit von der Abweichung von der Sinusförmigkeit automatisch geschaltet. Insbesondere weist das Ladegerät eine Eingangsfiltereinheit mit zumindest zwei voneinander unabhängigen Filterstufen auf, welche in Abhängigkeit von der Sinusförmigkeit der Netzspannung schaltbar sind. Insbesondere ist die Eingangsfiltereinheit dazu vorgesehen, zumindest eine Störung einer Netzspannung zumindest teilweise zu filtern. Die Eingangsfiltereinheit weist zumindest eine Filterstufe auf, welche dazu vorgesehen ist, bei einem Betrieb des Ladegeräts mit einer zumindest im Wesentlichen spektralreinen sinusförmigen Netzspannung geschaltet zu werden. Insbesondere ist die Filterstufe für zumindest im Wesentlichen sinusförmige Netzspannungen mit einer Frequenz von zumindest im Wesentlichen 50 Hz und/oder 60 Hz ausgelegt und/oder optimiert. Die Eingangsfiltereinheit weist insbesondere zumindest eine weitere Filterstufe auf, welche dazu vorgesehen ist, bei einem Betrieb des Ladegeräts mit einer nichtsinusförmigen Netzspannung geschaltet zu werden. Die weitere Filterstufe ist insbesondere für nichtsinusförmige Wechselspannungen, insbesondere für Wechselspannungen mit einem modifizierten Sinusverlauf, ausgelegt und/oder optimiert. Alternativ oder zusätzlich wird vorgeschlagen, dass in zumindest einem Verfahrensschritt in Abhängigkeit von der Abweichung von der Sinusförmigkeit der Eingangsfiltereinheit zumindest ein Vorwiderstand vorgeschaltet wird. Insbesondere wird der Vorwiderstand der Eingangsfiltereinheit in Abhängigkeit von der Abweichung von der Sinusförmigkeit automatisch vorgeschaltet. Insbesondere ist der Vorwiderstand dazu vorgesehen, der Eingangsfiltereinheit bei Vorliegen einer nichtsinusförmigen Netzspannung vorgeschaltet zu werden. Insbesondere ist der Vorwiderstand bei Vorliegen einer sinusförmigen Netzspannung, insbesondere mittels zumindest eines Schaltelements, überbrückbar. Der Vorwiderstand wird bei Vorliegen einer sinusförmigen Netzspannung insbesondere automatisch überbrückt. Insbesondere ist der Vorwiderstand dazu vorgesehen, bei Vorliegen einer nicht sinusförmigen Netzspannung insbesondere durch schnelle Flanken verursachte Einschaltstromspritzen zumindest zu reduzieren. Hierdurch kann eine vorteilhafte Anpassung des Ladegeräts an die jeweilig vorliegende Netzspannung erfolgen. Insbesondere kann das Ladegerät vorteilhaft einfach an eine nichtsinusförmige Netzspannung, beispielsweise bei Verwendung eines Wechselrichters, angepasst werden, wodurch insbesondere eine Belastung des Ladegeräts, insbesondere eine Belastung einer Eingangsfiltereinheit und/oder einer Ladeeinheit, vorteilhaft reduziert werden kann.

Zudem wird eine Ladegerätevorrichtung, insbesondere für ein netzbetriebenes Ladegerät, zur Durchführung des erfindungsgemäßen Verfahrens vorgeschlagen, mit einer Eingangsfiltereinheit, welche dazu vorgesehen ist, zumindest eine Störung einer Netzspannung zumindest teilweise zu filtern, und mit einer Detektionseinheit, welche dazu vorgesehen ist, eine Abweichung von einer Sinusförmigkeit der Netzspannung zu detektieren. Unter einer "Ladegerätevorrichtung" soll in diesem Zusammenhang insbesondere zumindest ein Teil, insbesondere eine Unterbaugruppe, eines Ladegeräts verstanden werden. Insbesondere kann die Ladegerätevorrichtung auch das gesamte Ladegerät umfassen. Unter einer "Eingangsfiltereinheit" soll in diesem Zusammenhang insbesondere eine elektronische Einheit, insbesondere eine elektronische Schaltung, verstanden werden, welche dazu vorgesehen ist, zumindest ein elektrisches Signal, insbesondere eine Netzspannung, insbesondere abhängig von der Frequenz in Amplitude und/oder in der Phasenlage zu verändern. Insbesondere ist die Eingangsfiltereinheit dazu vorgesehen, unerwünschte Signalanteile abzuschwächen und/oder zu unterdrücken. Die Eingangsfiltereinheit ist insbesondere als analoge passive und/oder aktive Filtereinheit ausgebildet. Unter einer "Detektionseinheit" soll in diesem Zusammenhang insbesondere eine elektronische Einheit verstanden werden, welche dazu vorgesehen ist, die Netzspannung auf eine Abweichung von einer Sinusförmigkeit hin zu analysieren und/oder zu überwachen. Insbesondere ist die Detektionseinheit dazu vorgesehen, die Netzspannung zumindest im Wesentlichen kontinuierlich zu erfassen, analysieren und/oder zu überwachen. Die Detektionseinheit weist insbesondere eine Recheneinheit zur Analyse der Netzspannung auf. Unter einer "Recheneinheit" soll insbesondere ein Controller mit einem Prozessor, einer Speichereinheit, und/oder ein in der Speichereinheit gespeichertes Betriebs-, Steuer- und/oder Berechnungsprogramm verstanden werden. Hierdurch kann eine gattungsgemäße Ladegerätevorrichtung mit vorteilhaften Eigenschaften zum Betrieb eines netzbetriebenen Ladegeräts bereitgestellt werden. Insbesondere kann durch eine Detektion einer Abweichung von einer Sinusförmigkeit der Netzspannung während einer Inbetriebnahme und/oder eines Betriebs eines Ladegeräts vorteilhaft einfach und/oder zuverlässig erkannt werden, ob das Ladegerät an einem Spannungsversorgungsnetz mit einer zumindest im Wesentlichen spektralreinen sinusförmigen Netzspannung oder an einem Spannungsversorgungsnetz mit einer wechselförmigen Netzspannung betrieben wird, welche insbesondere das Ladegerät schädigende Oberwellen und/oder Schaltflanken aufweist.

Ferner wird vorgeschlagen, dass die Ladegerätevorrichtung zumindest einen Vorwiderstand aufweist, welcher der Eingangsfiltereinheit, bei einer Abweichung von einer Sinusförmigkeit der Netzspannung vorschaltbar ist. Vorzugsweise ist der Vorwiderstand bei Vorliegen einer sinusförmigen Netzspannung überbrückbar. Insbesondere ist der Vorwiderstand der Eingangsfiltereinheit in Abhängigkeit von der Abweichung von der Sinusförmigkeit automatisch vorschaltbar. Insbesondere ist der Vorwiderstand, der Eingangsfiltereinheit bei Vorliegen einer nichtsinusförmigen Netzspannung vorschaltbar. Insbesondere ist der Vorwiderstand bei Vorliegen einer sinusförmigen Netzspannung, insbesondere mittels zumindest eines Schaltelements, überbrückbar. Der Vorwiderstand ist bei Vorliegen einer sinusförmigen Netzspannung insbesondere automatisch überbrückbar. Insbesondere ist der Vorwiderstand dazu vorgesehen, bei Vorliegen einer nicht sinusförmigen Netzspannung insbesondere durch schnelle Flanken verursachte Einschaltstromspritzen zumindest zu reduzieren. Hierdurch kann eine vorteilhafte Anpassung des Ladegeräts an die jeweilig vorliegende Netzspannung erfolgen.

Des Weiteren wird vorgeschlagen, dass die Eingangsfiltereinheit zumindest zwei voneinander unabhängige Filterstufen aufweist, welche in Abhängigkeit von der Sinusförmigkeit der Netzspannung schaltbar sind. Insbesondere sind die Filterstufen in Abhängigkeit von der Abweichung von der Sinusförmigkeit automatisch schaltbar. Die Eingangsfiltereinheit weist zumindest eine Filterstufe auf, welche dazu vorgesehen ist, bei einem Betrieb des Ladegeräts mit einer zumindest im Wesentlichen spektralreinen sinusförmigen Netzspannung geschaltet zu sein. Insbesondere ist die Filterstufe für zumindest im Wesentlichen sinusförmige Netzspannungen einer Frequenz von zumindest im Wesentlichen 50 Hz und/oder 60 Hz ausgelegt und/oder optimiert. Die Eingangsfiltereinheit weist insbesondere zumindest eine weitere Filterstufe auf, welche dazu vorgesehen ist, bei einem Betrieb des Ladegeräts mit einer nichtsinusförmigen Netzspannung geschaltet zu sein. Die weitere Filterstufe ist insbesondere für nichtsinusförmige Wechselspannungen, insbesondere für Wechselspannungen mit einem modifizierten Sinusverlauf, ausgelegt und/oder optimiert. Hierdurch kann eine vorteilhafte Anpassung des Ladegeräts an die jeweilig vorliegende Netzspannung erfolgen.

Zudem wird vorgeschlagen, dass die Ladegerätevorrichtung zumindest eine Umschalteinheit, welche in Abhängigkeit von der Sinusförmigkeit der Netzspannung dazu vorgesehen ist, verschiedene Filterstufen der Eingangsfiltereinheit zu schalten und/oder der Eingangsfiltereinheit zumindest einen Vorwiderstand vorzuschalten. Unter einer "Umschalteinheit" soll insbesondere eine Einheit verstanden werden, welche dazu vorgesehen ist, zumindest einen elektrischen Kontakt zu öffnen und/oder zu schließen und/oder zwischen zumindest zwei elektrischen Kontakten umzuschalten. Insbesondere weist die Umschalteinheit zumindest eine insbesondere durch die Detektionseinheit ansteuerbares Umschaltelement, insbesondere zumindest einen elektrischen Schalter und/oder ein Relais, auf. Hierdurch kann eine vorteilhaft einfache Umschaltung zwischen verschiedenen Filterstufen und/oder ein vorteilhaft einfaches Vorschalten des Vorwiderstands erreicht werden.

Des Weiteren wird ein netzbetriebenes Ladegerät mit zumindest einer erfindungsgemäßen Ladegerätevorrichtung vorgeschlagen. Insbesondere kann die Ladegerätevorrichtung zumindest teilweise in das Ladegerät integriert sein oder dem Ladegerät, insbesondere als separate Baugruppe, vorgeschaltet sein. Vorzugsweise ist die Ladegerätevorrichtung vollständig in das Ladegerät integriert. Hierdurch kann ein Ladegerät mit einem vorteilhaft großen Einsatzspektrum bereitgestellt werden. Insbesondere wird vorteilhaft ermöglicht, das Ladegerät sowohl an einer sinusförmigen Netzspannung als auch an einer nichtsinusförmigen Netzspannung zu betreiben.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines netzbetriebenen Ladegeräts mit einer Ladegerätevorrichtung, welche eine Eingangsfiltereinheit und einen schaltbaren Vorwiderstand aufweist,
- Fig. 2: einen Spannungsverlauf und ein Frequenzspektrum einer nichtsinusförmigen Netzspannung und
- Fig. 3: eine schematische Darstellung eines alternativen netzbetriebenen Ladegeräts mit einer Ladegerätevorrichtung, welche eine Eingangsfiltereinheit mit zwei unabhängigen Filterstufen aufweist.

### Beschreibung der Ausführungsbeispiele

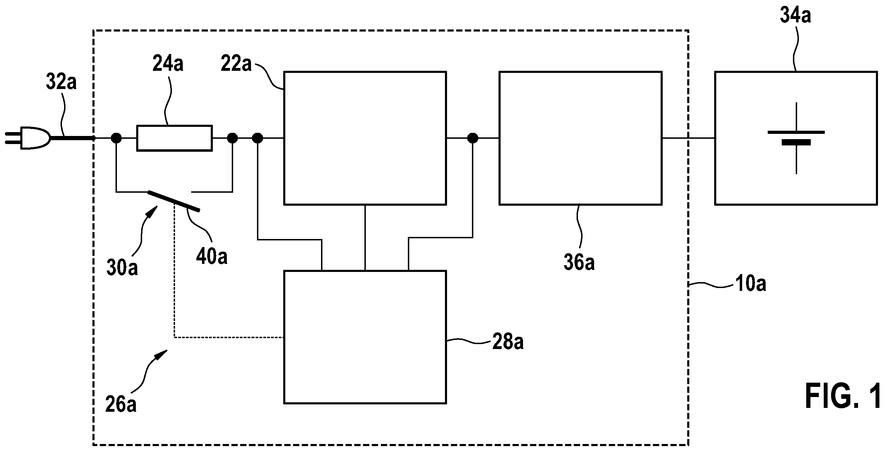

Figur 1 zeigt eine schematische Darstellung eines netzbetriebenen Ladegeräts 10a. Das Ladegerät 10a ist dazu vorgesehen, während eines Ladevorgangs eine elektrische Energie an zumindest eine Energiespeichereinheit 34a, beispielsweise an eine wiederaufladbare Batterie und/oder einen Akku, zu übertragen. Das Ladegerät 10a ist dazu vorgesehen, mit einer Wechselspannung betrieben zu werden. Das Ladegerät 10a weist eine Anschlussleitung 32a auf, welche dazu vorgesehen ist, das Ladegerät 10a mit einem nicht dargestellten Spannungsversorgungsnetz zu verbinden. Das Spannungsversorgungsnetz kann insbesondere als ein Wechselspannungsnetz und/oder ein Gleichspannungsnetz, insbesondere als ein Bordnetz eines Fahrzeugs, mit zumindest einem Wechselrichter ausgebildet sein, welcher dazu vorgesehen ist, die Gleichspannung des Gleichspannungsnetzes in eine Wechselspannung zu wandeln. Das Ladegerät 10a ist dazu vorgesehen, mit einer Netzspannung 12a des Spannungsversorgungsnetzes betrieben zu werden.

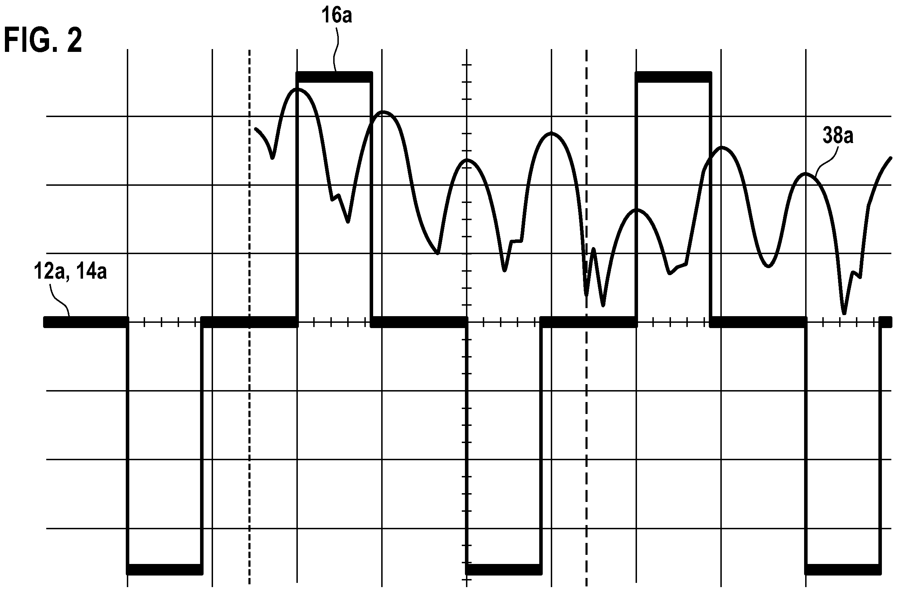

Das Ladegerät 10a weist ferner eine Ladegerätevorrichtung 26a mit einer Eingangsfiltereinheit 22a auf, welche dazu vorgesehen ist, Störungen der Netzspannung 12a zumindest teilweise zu filtern. Das Ladegerät 10a weist ferner eine Ladeeinheit 36a auf, welche dazu vorgesehen ist, die zumindest im Wesentlichen entstörte Netzspannung 12a in eine Ladespannung, insbesondere in eine Ladegeleichspannung umzuwandeln und/oder zu transformieren. Figur 2 zeigt in einem Diagramm einen zeitlichen Spannungsverlauf 14a einer nichtsinusförmigen Netzspannung 12a sowie das Frequenzspektrum 38a der Netzspannung 12a. Solch ein Spannungsverlauf 14a tritt insbesondere bei einer Verwendung von Wechselrichtern auf, welche eine Wechselspannung in Form eines modifizierten Sinus ausgeben, bei welchen der Spannungsverlauf 14a einem sinusförmigen Verlauf insbesondere treppenförmig, trapezförmig und/oder wie dargestellt rechteckförmig angenähert ist. Die so erzeugte Netzspannung 12a ist mit starken Oberwellen und schnellen Schaltflanken behaftet, welche eine hohe Belastung für die Eingangsfiltereinheit 22a darstellen, was zu einer Beschädigung des Ladegeräts 10a führen kann.

Um einen sicheren und insbesondere beschädigungsfreien Betrieb des Ladegeräts 10a mit einer Netzspannung 12a, welche zumindest zeitweise einen nichtsinusförmigen Spannungsverlauf 14a aufweisen kann oder dauerhaft einen nichtsinusförmigen Spannungsverlauf 14a aufweist, zu gewährleisten, wird während eines Betriebs des Ladegeräts 10a eine Abweichung von einer Sinusförmigkeit der Netzspannung 12a detektiert. Die Ladegerätevorrichtung 26a weist eine Detektionseinheit 28a auf, welche dazu vorgesehen ist, die Abweichung von einer Sinusförmigkeit der Netzspannung 12a zu detektieren. Insbesondere ist die Detektionseinheit 28a dazu vorgesehen, die Netzspannung 12a auf eine Abweichung von einer Sinusförmigkeit hin zu analysieren und/oder zu überwachen. Die Abweichung von der Sinusförmigkeit der Netzspannung 12a kann insbesondere zumindest anhand des Frequenzspektrums 38a der Netzspannung 12a detektiert werden. Insbesondere wird das Frequenzspektrum 38a der Netzspannung 12a kontinuierlich oder quasikontinuierlich, beispielsweise mittels einer harmonischen Analyse, insbesondere einer Fourier-Analyse, beispielsweise unter Verwendung einer diskreten und/oder schnellen Fourier-Transformation, erfasst und/oder berechnet. Insbesondere wird das Frequenzspektrum 38a der Netzspannung 12a auf das Vorhandensein von Oberwellen hin analysiert. Alternativ oder zusätzlich kann die Abweichung von der Sinusförmigkeit der Netzspannung 12a zumindest anhand einer Scheitelspannung 16a der Netzspannung 12a detektiert werden. Insbesondere wird die Scheitelspannung 16a der Netzspannung 12a kontinuierlich oder quasikontinuierlich analog und/oder mittels eines Analog-Digital-Wandlers gemessen und/oder erfasst. Insbesondere wird die gemessene und/oder erfasste Scheitelspannung 16a der Netzspannung 12a dahingehend ausgewertet, ob diese eine Scheitelspannung einer zumindest im Wesentlichen spektralreinen Sinusspannung mit zumindest im Wesentlichen identischem Effektivwert überschreitet.

Die Ladegerätevorrichtung 26a weist einen Vorwiderstand 24a auf, welcher der Eingangsfiltereinheit 22a, bei einer Abweichung von einer Sinusförmigkeit der Netzspannung 12a vorschaltbar ist. Der Vorwiderstand 24a wird der Eingangsfiltereinheit 22a bei Vorliegen einer nichtsinusförmigen Netzspannung 12a vorgeschaltet. Der Vorwiderstand 24a ist dazu vorgesehen, bei Vorliegen einer nicht sinusförmigen Netzspannung 12a insbesondere durch schnelle Flanken verursachte Einschaltstromspritzen zumindest zu reduzieren. Die Ladegerätevorrichtung 26a weist eine Umschalteinheit 30a auf, welche in Abhängigkeit von der Sinusförmigkeit der Netzspannung 12a dazu vorgesehen ist, der Eingangsfiltereinheit 22a den Vorwiderstand 24a vorzuschalten. Die Umschalteinheit 30a weist ein durch die Detektionseinheit 28a ansteuerbares Umschaltelement 40a, beispielsweise einen elektrischen Schalter und/oder ein Relais, auf. Der Vorwiderstand 24a ist bei Vorliegen einer sinusförmigen Netzspannung mittels der Umschalteinheit 30a überbrückbar. Hierdurch kann eine vorteilhafte Anpassung des Ladegeräts 10a an die jeweilig vorliegende Netzspannung erfolgen.

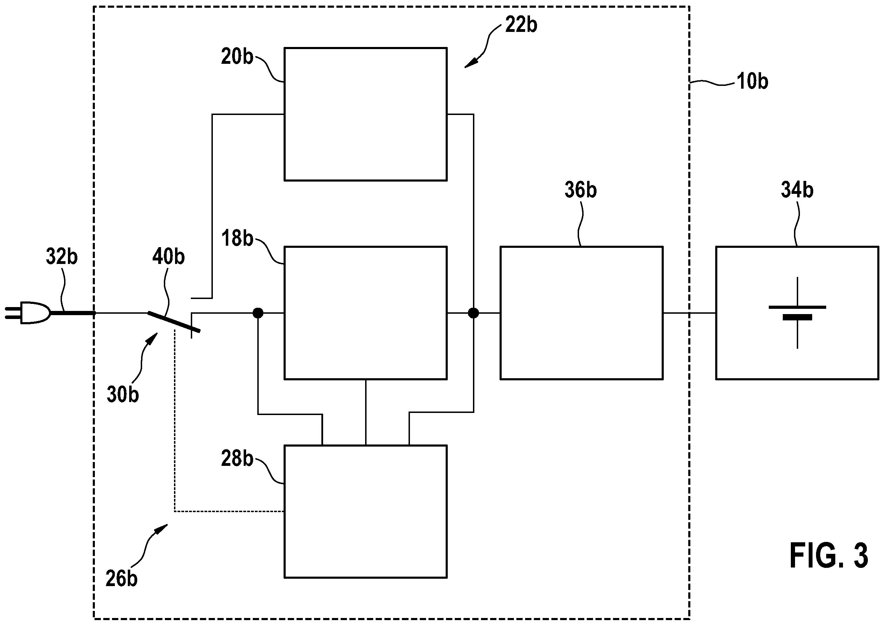

In Figur 3 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In dem Ausführungsbeispiel der Figur 3 ist der Buchstabe a durch den Buchstaben b ersetzt.

Figur 3 zeigt eine schematische Darstellung eines alternativen netzbetriebenen Ladegeräts 10b. Das Ladegerät 10b ist dazu vorgesehen, während eines Ladevorgangs eine elektrische Energie an zumindest eine Energiespeichereinheit 34b, beispielsweise an eine wiederaufladbare Batterie und/oder einen Akku, zu übertragen. Das Ladegerät 10b ist dazu vorgesehen, mit einer Wechselspannung betrieben zu werden. Das Ladegerät 10b weist eine Anschlussleitung 32b auf, welche dazu vorgesehen ist, das Ladegerät 10b mit einem nicht dargestellten Spannungsversorgungsnetz zu verbinden. Das Spannungsversorgungsnetz kann insbesondere als ein Wechselspannungsnetz und/oder ein Gleichspannungsnetz, insbesondere als ein Bordnetz eines

Fahrzeugs, mit zumindest einem Wechselrichter ausgebildet sein, welcher dazu vorgesehen ist, die Gleichspannung des Gleichspannungsnetzes in eine Wechselspannung zu wandeln. Das Ladegerät 10b ist dazu vorgesehen mit einer Netzspannung 12b des Spannungsversorgungsnetzes betrieben zu werden.

Das Ladegerät 10b weist ferner eine Ladegerätevorrichtung 26b mit einer Eingangsfiltereinheit 22b auf, welche dazu vorgesehen ist, Störungen der Netzspannung 12b zumindest teilweise zu filtern. Das Ladegerät 10b weist ferner eine Ladeeinheit 36b auf, welche dazu vorgesehen ist, die zumindest im Wesentlichen entstörte Netzspannung 12b in eine Ladespannung, insbesondere in eine Ladegeleichspannung umzuwandeln und/oder zu transformieren.

Um einen sicheren und insbesondere beschädigungsfreien Betrieb des Ladegeräts 10b mit einer Netzspannung 12b, welche zumindest zeitweise einen nichtsinusförmigen Spannungsverlauf 14b aufweisen kann oder dauerhaft einen nichtsinusförmigen Spannungsverlauf 14b aufweist, zu gewährleisten, wird während eines Betriebs des Ladegeräts 10b eine Abweichung von einer Sinusförmigkeit der Netzspannung 12b detektiert. Die Ladegerätevorrichtung 26b weist eine Detektionseinheit 28b auf, welche dazu vorgesehen ist, die Abweichung von einer Sinusförmigkeit der Netzspannung 12b zu detektieren. Insbesondere ist die Detektionseinheit 28b dazu vorgesehen, die Netzspannung 12b auf eine Abweichung von einer Sinusförmigkeit hin zu analysieren und/oder zu überwachen. Die Abweichung von der Sinusförmigkeit der Netzspannung 12b kann insbesondere zumindest anhand des Frequenzspektrums 38b der Netzspannung 12b detektiert werden. Insbesondere wird das Frequenzspektrum 38b der Netzspannung 12b kontinuierlich oder quasikontinuierlich, beispielsweise mittels einer harmonischen Analyse, insbesondere einer Fourier-Analyse, beispielsweise unter Verwendung einer diskreten und/oder schnellen Fourier-Transformation, erfasst und/oder berechnet. Insbesondere wird das Frequenzspektrum 38b der Netzspannung 12b auf das Vorhandensein von Oberwellen hin analysiert. Alternativ oder zusätzlich kann die Abweichung von der Sinusförmigkeit der Netzspannung 12b zumindest anhand einer Scheitelspannung 16b der Netzspannung 12b detektiert werden. Insbesondere wird die Scheitelspannung 16b der Netzspannung 12b kontinuierlich oder quasikontinuierlich analog und/oder mittels eines Analog-Digital-Wandlers gemessen und/oder erfasst. Insbesondere wird die gemessene und/oder erfasste Scheitelspannung 16b der Netzspannung 12b dahingehend ausgewertet, ob diese eine Scheitelspannung einer zumindest im Wesentlichen spektralreinen Sinusspannung mit zumindest im Wesentlichen identischem Effektivwert überschreitet.

Die Ladegerätevorrichtung 26b weist zwei voneinander unabhängige Filterstufen 18b, 20b auf, welche in Abhängigkeit von der Sinusförmigkeit der Netzspannung 12b schaltbar sind. Eine erste Filterstufe 18b ist dazu vorgesehen, bei einem Betrieb des Ladegeräts 10b mit einer zumindest im Wesentlichen spektralreinen sinusförmigen Netzspannung geschaltet zu sein. Die erste Filterstufe 18b ist für zumindest im Wesentlichen sinusförmige Netzspannungen mit einer Frequenz von zumindest im Wesentlichen 50 Hz und/oder 60 Hz ausgelegt und/oder optimiert. Die zweite Filterstufe 20b ist dazu vorgesehen, bei einem Betrieb des Ladegeräts 10b mit einer nichtsinusförmigen Netzspannung 12b geschaltet zu sein. Die zweite Filterstufe 20b ist für nichtsinusförmige Wechselspannungen, insbesondere für Wechselspannungen mit einem modifizierten Sinusverlauf, ausgelegt und/oder optimiert.

Die Ladegerätevorrichtung 26b weist eine Umschalteinheit 30a auf, welche in Abhängigkeit von der Sinusförmigkeit der Netzspannung 12a dazu vorgesehen ist, die Filterstufen 18b; 20b der Eingangsfiltereinheit 22b zu schalten. Die Umschalteinheit 30b weist ein durch die Detektionseinheit 28b ansteuerbares Umschaltelement 40b, beispielsweise einen elektrischen Schalter und/oder ein Relais, auf. Hierdurch kann eine vorteilhafte Anpassung des Ladegeräts 10b an die jeweilig vorliegende Netzspannung erfolgen.

## Patentansprüche

1. Ladegerätevorrichtung, für ein netzbetriebenes Ladegerät (10a; 10b), zur Durchführung eines Verfahrens zum Betrieb des netzbetriebenen Ladegeräts (10a; 10b) an einem Spannungsversorgungsnetz mit einer Netzspannung (12a; 12b), welche zumindest zeitweise einen nichtsinusförmigen Spannungsverlauf (14a; 14b), insbesondere das Ladegerät schädigende Oberwellen und/oder Schaltflanken aufweisen kann, wobei in zumindest einem Verfahrensschritt eine Abweichung von einer Sinusförmigkeit der Netzspannung (12a; 12b) detektiert wird und in zumindest einem Verfahrensschritt in Abhängigkeit von der Abweichung von der Sinusförmigkeit verschiedene Filterstufen (18b, 20b) einer Eingangsfiltereinheit (22b) geschaltet werden , mit einer Eingangsfiltereinheit (22a; 22b), welche dazu vorgesehen ist, zumindest eine Störung einer Netzspannung (12a; 12b) zumindest teilweise zu filtern, mit einer Detektionseinheit (28a; 28b), welche dazu vorgesehen ist, eine Abweichung von einer Sinusförmigkeit der Netzspannung (12a; 12b) zu detektieren **dadurch gekennzeichnet, dass** die Eingangsfiltereinheit (22b) zumindest zwei voneinander unabhängige Filterstufen (18b, 20b) aufweist, welche in Abhängigkeit von der Sinusförmigkeit der Netzspannung (12b) schaltbar sind.

2. Ladegerätevorrichtung nach Anspruch 1, **gekennzeichnet durch** zumindest einen Vorwiderstand (24a), welcher der Eingangsfiltereinheit (22a), bei einer Abweichung von einer Sinusförmigkeit der Netzspannung (12a) vorschaltbar ist.

3. Ladegerätevorrichtung nach Anspruch 1 oder 2, **dadurch gekennzeichnet, dass** der Vorwiderstand (24a) bei Vorliegen einer sinusförmigen Netzspannung überbrückbar ist.

4. Ladegerätevorrichtung nach einem der Ansprüche 1 bis 3, **gekennzeichnet durch** zumindest eine Umschalteinheit (30a; 30b), welche in Abhängigkeit von der Sinusförmigkeit der Netzspannung (12a; 12b) dazu vorgesehen ist, verschiedene Filterstufen (18b; 20b) der Eingangsfiltereinheit (22b) zu schalten und/oder der Eingangsfiltereinheit (22a) zumindest einen Vorwiderstand (24a) vorzuschalten.

5. Lagegerätvorrichtung nach einem der vorhergehenden Ansprüche, **dadurch gekennzeichnet, dass** die eine Filterstufe (18b) dazu vorgesehen ist, bei einem Betrieb des Ladegeräts mit einer zumindest im Wesentlichen spektralreinen sinusförmigen Netzspannung geschaltet zu sein, und die weitere Filterstufe (20b) dazu vorgesehen ist, bei einem Betrieb des Ladegeräts mit einer nichtsinusförmigen Netzspannung geschaltet zu sein.

6. Netzbetriebenes Ladegerät mit zumindest einer Ladegerätevorrichtung (26a; 26b) nach einem der Ansprüche 1 bis 5.

## Claims

1. Charger apparatus for a mains-operated charger (10a; 10b) for carrying out a method for operating the mains-operated charger (10a; 10b) from a voltage supply network having a mains voltage (12a; 12b) which at least occasionally can have a non-sinusoidal voltage profile (14a; 14b), in particular harmonics and/or switching edges which damage the charger, wherein a deviation from a sinusoidal shape of the mains voltage (12a; 12b) is detected in at least one method step and different filter stages (18b, 20b) of an input filter unit (22b) are connected in at least one method step on the basis of the deviation from the sinusoidal shape, having an input filter unit (22a; 22b) which is provided for the purpose of at least partially filtering at least one disruption in a mains voltage (12a; 12b), having a detection unit (28a; 28b) which is provided for the purpose of detecting a deviation from a sinusoidal shape of the mains voltage (12a; 12b), **characterized in that** the input filter unit (22b) has at least two filter stages (18b, 20b) which are independent of one another and can be connected on the basis of the sinusoidal shape of the mains voltage (12b).

2. Charger apparatus according to Claim 1, **characterized by** at least one series resistor (24a) which can be connected upstream of the input filter unit (22a) in the event of a deviation from a sinusoidal shape of the mains voltage (12a).

3. Charger apparatus according to Claim 1 or 2, **characterized in that** the series resistor (24a) can be bridged if there is a sinusoidal mains voltage.

4. Charger apparatus according to one of Claims 1 to 3, **characterized by** at least one changeover unit (30a; 30b) which, on the basis of the sinusoidal shape of the mains voltage (12a; 12b), is provided for the purpose of connecting different filter stages (18b; 20b) of the input filter unit (22b) and/or connecting at least one series resistor (24a) upstream of the input filter unit (22a).

5. Charger apparatus according to one of the preceding claims, **characterized in that** one filter stage (18b) is provided for the purpose of being connected during operation of the charger with an at least substantially spectrally pure sinusoidal mains voltage, and the further filter stage (20b) is provided for the purpose of being connected during operation of the charger with a non-sinusoidal mains voltage.

6. Mains-operated charger having at least one charger apparatus (26a; 26b) according to one of Claims 1 to 5.

## Revendications

1. Dispositif d'appareil de charge (10a ; 10b) fonctionnant sur secteur, pour la mise en œuvre d'un procédé pour faire fonctionner l'appareil de charge (10a ; 10b) fonctionnant sur secteur au niveau d'un secteur d'alimentation ayant une tension secteur (12a ; 12b) pouvant présenter, au moins par moments, une courbe de tension non sinusoïdale (14a ; 14b), en particulier des harmoniques et/ou des fronts de commutation endommageant l'appareil de charge, dans lequel, lors d'au moins une étape de procédé, un écart par rapport à une forme sinusoïdale de la tension secteur (12a ; 12b) est détecté et, lors d'au moins une étape de procédé, différents étages de filtrage (18b, 20b) d'une unité de filtrage d'entrée (22b) sont connectés en fonction de l'écart par rapport à la forme sinusoïdale, comportant une unité de filtrage d'entrée (22a ; 22b) qui est prévue pour filtrer au moins partiellement au moins une perturbation d'une tension secteur (12a ; 12b), et comportant une unité de détection (28a ; 28b) qui est prévue pour détecter un écart par rapport à une forme sinusoïdale de la tension secteur (12a ; 12b),
**caractérisé en ce que** l'unité de filtrage d'entrée (22b) comporte au moins deux étages de filtrage (18b, 20b) indépendants l'un de l'autre, qui peuvent être commutés en fonction de la forme sinusoïdale de la tension secteur (12b).

2. Dispositif d'appareil de charge selon la revendication 1, **caractérisé par** au moins une résistance série (24a) qui peut être connectée en amont de l'unité de filtrage d'entrée (22a) en cas d'écart par rapport à une forme sinusoïdale de la tension secteur (12a).

3. Dispositif d'appareil de charge selon la revendication 1 ou 2, **caractérisé en ce que** la résistance série (24a) peut être pontée en présence d'une tension secteur sinusoïdale.

4. Dispositif d'appareil de charge selon l'une des revendications 1 à 3, **caractérisé par** au moins une unité de commutation (30a ; 30b) qui est prévue, en fonction de la forme sinusoïdale de la tension secteur (12a ; 12b), pour connecter différents étages de filtrage (18b ; 20b) de l'unité de filtrage d'entrée (22b) et/ou pour connecter au moins une résistance série (24a) en amont de l'unité de filtrage d'entrée (22a).

5. Dispositif d'appareil de charge selon l'une des revendications précédentes, **caractérisé en ce que** le premier étage de filtrage (18b) est prévu pour être connecté à une tension secteur sinusoïdale au moins sensiblement pure spectralement lors d'un fonctionnement de l'appareil de charge, et **en ce que** l'autre étage de filtrage (20b) est prévu pour être connecté à une tension secteur non sinusoïdale lors d'un fonctionnement de l'appareil de charge.

6. Appareil de charge fonctionnant sur secteur, comportant au moins un dispositif d'appareil de charge (26a ; 26b) selon l'une des revendications 1 à 5.
